# EUROPÄISCHE PATENTSCHRIFT

(11) **EP 2 955 277 B1**
(45) Veröffentlichungstag und Bekanntmachung des Hinweises auf die Patenterteilung: **09.08.2017**
(21) Anmeldenummer: 15171736.0
(22) Anmeldetag: 11.06.2015
(51) Int. Cl.: E02B 17/00, E02B 17/02

(54) **GRÜNDUNGSSTRUKTUR FÜR OFFSHORE-ANLAGEN, INSBESONDERE WINDENERGIEANLAGEN**
FOUNDATION STRUCTURE FOR OFFSHORE ASSEMBLIES, IN PARTICULAR WIND TURBINES
STRUCTURE DE FONDATION POUR INSTALLATIONS OFFSHORE, EN PARTICULIER EOLIENNES

(30) Priorität: 11.06.2014 DE 202014004670 U
(43) Veröffentlichungstag der Anmeldung: 16.12.2015
(73) Patentinhaber: Maritime Offshore Group GmbH, 28355 Bremen (DE)
(72) Erfinder: Reales Bertomeo, Emilio, 27753 Delmenhorst (DE); Schramm, Christof, 28357 Bremen (DE); Löbermann, Matthias, 30625 Hannover (DE)
(74) Vertreter: Eisenführ Speiser

(56) Entgegenhaltungen:
- EP-A1- 2 479 103
- EP-A2- 2 036 814
- WO-A2-2013/189659
- DE-A1- 2 536 579
- GB-A- 1 499 142
- NL-C- 2 009 579
- US-A- 3 453 830
- US-A- 3 797 256

## Beschreibung

Die Erfindung bezieht sich auf eine Gründungsstruktur für Offshore-Anlagen, insbesondere Windenergieanlagen, mit einem Jacket-Abschnitt aus mehreren fachwerkartig miteinander verbundenen Streben. Das Dokument GB1499142 offenbart eine Gründungsstruktur mit den Merkmalen des Oberbegriffs von Anspruch 1.

Solche bekannten, auf dem Prinzip einer Jacket-Konstruktion beruhenden Gründungsstrukturen kommen häufig bei der Installation von Offshore-Anlagen, wie beispielsweise Bohrinseln oder Windkraftanlagen, zum Einsatz. Jacket-Konstruktionen bieten die Möglichkeit der Errichtung von Offshore-Anlagen in Bereichen von Gewässern mit großer Gewässertiefe. Die Jacket-Konstruktionen weisen gegenüber üblichen Monopile-Konstruktionen eine erhöhte Wasserdurchlässigkeit auf, wodurch die von Gewässerströmungen verursachten Belastungen auf die Offshore-Gründungsstruktur reduziert sind.

Darüber hinaus hat sich ebenfalls gezeigt, dass die Installation von auf Jacket-Konstruktionen basierenden Gründungsstrukturen mit einer reduzierten Belastung für die Umwelt, insbesondere einer reduzierten Geräuschemission, durchgeführt werden kann. Die bekannten Jacket-Konstruktionen erlauben die Verankerung der Gründungsstruktur am Gewässergrund über eine Mehrzahl von Rammpfählen. Das Eintreiben von mehreren kleineren Rammpfählen in den Gewässergrund kann mit einer wesentlich geringeren Geräuschemission durchgeführt werden, als das Eintreiben großer Rammpfähle für Monopile- oder Tripod-Verankerungen.

Aufgrund der ständig zunehmenden Leistungskennwerte der Windenergieanlage und den daraus resultierenden im Verhältnis anwachsenden Abmessungen und Gewichten steigen ebenfalls die an die Offshore-Gründungsstrukturen gestellten Anforderungen bezüglich ihrer Tragfähigkeit und damit ihren Festigkeitseigenschaften. Das hat zur Folge, dass auch die Jacket-Konstruktionen stabiler und damit größer werden müssen. In ähnlichem Maße nehmen ebenfalls die Abmessungen der die Jacket-Konstruktionen im Gewässergrund, wie zum Beispiel im Meeresboden, verankernden Rammpfähle zu, was sich wieder nachteilig auf die entstehenden Geräuschemissionen bei der Installation auswirkt. Im Zusammenhang mit durchgeführten Umweltstudien wurde festgestellt, dass die Geräuschemission für Meerestiere selbst in größeren Entfernungen zum Installationsort eine deutliche Gefährdung darstellen und gesundheitliche Schäden beziehungsweise Beeinträchtigungen der Meerestiere in den Gewässern verursachen können.

Um die Geräuschemissionen insbesondere beim Pfahlrammen zu verringern, werden Einrichtungen zum Erzeugen von Luftblasenschleiern an der Rammstelle oder andere schalldämmende Einrichtungen eingesetzt, die über den gesamten Zeitraum des Rammvorganges betrieben werden müssen. Dadurch ist der Aufwand während der Installation der bekannten Gründungsstrukturen weiter erhöht.

Der Erfindung lag somit die Aufgabe zugrunde, eine Gründungsstruktur sowie ein Verfahren zum Errichten einer Gründungsstruktur anzugeben, mittels denen die Installation der Gründungsstruktur mit reduzierter Geräuschemission möglich ist und ohne dabei zu einer wesentlichen Erhöhung der Installations- oder Wartungskosten führt.

Die Erfindung löst die ihr zugrunde liegende Aufgabe bei einer Gründungsstruktur für Offshore-Anlagen der eingangs bezeichneten Art dadurch, dass der Jacket-Abschnitt einen Fußbereich aufweist, der mit einem Fundament, insbesondere Schwerkraftfundament zum Aufstellen auf dem Gewässergrund fest verbunden ist wobei das Fundament, insbesondere Schwerkraftfundament aus mehreren Fundamentkörpern gebildet ist, welche jeweils mindestens einen Füllraum zur Aufnahme von Ballastmaterial aufweisen, der Fundamentkörper eine Strebenkonstruktion aufweist, an der der Füllraum zur Aufnahme von Ballastmaterial angeordnet ist, und der Füllraum aus einem flexiblen, fluiddurchlässigem textilen Flächengebilde, vorzugsweise einem seewasserbeständigen Kunstfasertextil, gebildet ist.

Der Erfindung liegt dabei die Erkenntnis zugrunde, dass durch den Einsatz eines Fundament, insbesondere Schwerkraftfundamentes zum Aufstellen der Gründungstruktur auf dem Meeresboden auf den Vorgang des Rammens von Rammpfählen in den Gewässergrund verzichtet werden kann. Bei der Installation entstehende Geräuschemissionen sind deutlich verringert. Anstelle der Rammpfähle übernimmt nunmehr das Fundament, insbesondere Schwerkraftfundament das Einleiten der Gewichtskraft der Jacket-Konstruktion in den Boden beziehungsweise das Aufnehmen der beim Betrieb der Windenergieanlage auf die Jacket-Konstruktion einwirkenden, dynamisch auftretenden Windlasten an der Windenergieanlage. Eine auf einem Fundament, insbesondere Schwerkraftfundament fußende Gründungstruktur kann im Flachwasser (10 bis 20 Metern Wassertiefe) oder auch im Tiefwasser (bis zu 70 Metern und mehr) eingesetzt werden.

Zudem ist mit der Verwendung der Fundamentkörper, welche bevorzugt modulartig zusammengesetzt werden können, eine vereinfachte Vorfertigung von leicht transportablen Komponenten des Fundaments, insbesondere Schwerkraftfundamentes ermöglicht. Der Zusammenbau der Fundamentkörper zu einem Fundament, insbesondere Schwerkraftfundament, mit einer benötigten Anzahl an Fundamentkörpern kann an einem der See nahen Umladeplatz oder Verladeort vorgenommen werden. Durch die modulartig zusammensetzbaren Fundamentkörper, welche jeweils mindestens einen Füllraum zur Aufnahme von Ballastmaterial aufweisen, lassen sich die Fundamentkörper auf einfache Weise zu einem beliebig großen Fundament, insbesondere Schwerkraftfundament, zusammensetzen. Im Zusammenhang mit der vorliegenden Erfindung wird der Begriff Schwerkraftfundament auch für ein nach dem Befüllen mit dem Ballastmaterial, beispielsweise Sand beschwertes Fundament verwendet. In Abhängigkeit von den Abmessungen des Jacket-Abschnittes, insbesondere dessen Umfang im Fußbereich und der Anzahl der vorgesehenen Kopplungsstellen, werden beispielsweise vier, fünf, sechs, sieben oder mehr Fundamentkörper zur Ausbildung eines zusammenhängenden Fundaments, insbesondere Schwerkraftfundaments verwendet.

Die erfindungsgemäße Gründungsstruktur wird ferner dadurch vorteilhaft weitergebildet, dass der Fundamentkörper eine Strebenkonstruktion aufweist, an welcher der Füllraum zur Aufnahme von Ballastmaterial angeordnet ist. Die Strebenkonstruktion, welche die Form eines Käfigs aufweist, bewirkt eine hohe Festigkeit beziehungsweise Stabilität des Fundamentkörpers, über den jeweils zumindest ein bestimmter Anteil der wirkenden Kräfte in den Gewässergrund eingeleitet werden. Bevorzugt ist die Strebenkonstruktion des Fundamentkörpers direkt mit dem Fußbereich des Jacket-Abschnittes bevorzugt über Verbindungselemente gekoppelt. Vorzugsweise weist die Strebenkonstruktion eines jeweiligen Fundamentkörpers über einen Abschnitt seiner Höhe eine im Wesentlichen sechseckige Grundform beziehungsweise Querschnitt auf. Über die käfigartige Strebenkonstruktion ist ein Füllraum aufgenommen, bevorzugt wird der Füllraum zur Aufnahme von Ballastmaterial durch die Strebenkonstruktion in seinen äußeren Abmessungen begrenzt. Der Füllraum dient zur Aufnahme von Ballastmaterial, wie zum Beispiel Sand, Kies oder auch einem aushärtbaren Füllmaterial, mit dem das Eigengewicht des Fundamentkörpers bevorzugt erhöht werden kann. Damit wird das aus den Fundamentkörpern modulartig zusammensetzbare Fundament nach dem Einfüllen des Ballastmaterials zum Schwerkraftfundament. Darüber wird ein sicherer Aufstand des Fundaments, insbesondere Schwerkraftfundamentes auf dem Gewässergrund gewährleistet, welches durch seine höhere Masse eine verbesserte Standfestigkeit aufweist. Zudem werden auf den Jacket-Abschnitt einwirkende Meeresströmungen sicher aufgenommen, ohne das Risiko, dass die erfindungsgemäße Gründungsstruktur über den Gewässergrund bewegt wird.

Optional oder alternativ ist der Füllraum für das Ballastmaterial vorzugsweise aus einem flexiblen, bevorzugt fluiddurchlässigen textilen Flächengebilde, vorzugsweise einem seewasserbeständigen Kunstfasertextil, gebildet. Darüber ist gewährleistet, dass das Eigengewicht des Fundamentkörpers weiter verringert und dessen Handhabung beispielsweise beim Transport oder bei der Installation weiter vereinfacht ist. Das Ausbilden der Füllraumwandung aus dem fluiddurchlässigen Flächengebilde hat des Weiteren den Vorteil, dass beim Befüllen mit dem Ballastmaterial sich im Inneren des Füllraums befindliches Wasser selbsttätig beim Befüllen mit dem Ballastmaterial aus dem Füllraum herausgedrückt wird. Das Flächengebilde ist bevorzugt ein seewasserbeständiges Kunstfasertextil, bevorzugt ein Geotextil, das eine entsprechend der vorgesehenen Lebensdauer der Gründungsstruktur lange Haltbarkeit aufweist. Bevorzugt weist der Füllraum eine an die Formgebung der Strebenkonstruktion, insbesondere deren Käfigstruktur, angepasste äußere Form auf.

Bevorzugt weist das textile Flächengebilde eine vorbestimmte maximale Maschenweite auf und ist eingerichtet, das Ballastmaterial ab einer vorbestimmten Korngröße im inneren des Füllraumes zurückzuhalten. Damit ist erreicht, dass beispielsweise sandhaltiges Ballastmaterial im Füllraum durch das die Wandung des Füllraumes ausbildende flexible Flächengebilde zurückgehalten wird, welches eine vorbestimmte Mindestkorngröße aufweist. Wasser und auch feine Sedimente werden somit aus dem Inneren des Füllraumes heraus gedrückt. Vorzugsweise wird als textiles Flächengebilde ein Gewebe aus Kunstfasermaterial, Geotextil oder einem Vliesstoff verwendet, das vorteilhafte Eigenschaften hinsichtlich der Fluiddurchlässigkeit sowie der Seewasserbeständigkeit aufweist.

Das Fundament, insbesondere Schwerkraftfundament ist gemäß einer ersten Ausführungsform der Erfindung bereits während der Installation der Gründungsstruktur mit dem Fußbereich des Jacket-Abschnittes, auch bezeichnet als Jacket-Konstruktion, verbunden. Für eine feste Verbindung zwischen dem Jacket-Abschnitt und dem Fundament, insbesondere Schwerkraftfundament können diese an vorbestimmten Kopplungsstellen miteinander verschweißt werden. Eine alternative Ausgestaltung sieht vor, dass das Fundament, insbesondere Schwerkraftfundament und der Jacket-Abschnitt als einzelne Komponenten installiert werden. Die Montage von Fundament, insbesondere Schwerkraftfundament und Jacket-Abschnitt erfolgt dann vorzugsweise unter Wasser mit Hilfe von das Fundament, insbesondere Schwerkraftfundament und den Fußbereich des Abschnittes des Jackets miteinander verbindenden Adapterstücken. Die Gründungstruktur weist gemäß einer Ausführung einen Jacket-Abschnitt mit einer Aufnahme für die Offshore-Anlage und ein Fundament, insbesondere Schwerkraftfundament auf. Eine alternative Ausgestaltung der Gründungstruktur umfasst ein Fundament, insbesondere Schwerkraftfundament, einen Jacket-Abschnitt und ein über den Jacket-Abschnitt gehaltenes Zentralrohr, ähnlich einem Monopile. Die Aufnahme für die zu montierende Offshore-Anlage ist am oberen Endbereich des Zentralrohres angeordnet.

Eine alternative Ausgestaltung der Erfindung sieht vor, dass am Fundament, insbesondere Schwerkraftfundament Halte- bzw. Verankerungselemente vorgesehen sind, in denen Abschnitte von Rammpfählen aufgenommen werden können. Im Gegensatz zu einer reinen Rammpfahlverankerung weisen diese deutlich geringere Abmessungen auf. Beim Rammen entstehende Geräuschemissionen, liegen bevorzugt unterhalb der zulässigen Grenzwerte, auch ohne schalldämpfende Einrichtungen.

In einer weiteren Ausgestaltung der erfindungsgemäßen Gründungsstruktur weist das Fundament, insbesondere Schwerkraftfundament eine Mittenachse auf, um welche die Fundamentkörper in einem im Wesentlichen gleichmäßigen Abstand herum angeordnet sind, wobei jeweils durch die Mittenachse und die Fundamentkörpermitte verlaufende Radialachsen, welche unmittelbar zueinander benachbart sind, einen Winkel einschließen, der im Wesentlichen einem ganzen Teil eines Vollkreises entspricht. Mit der bevorzugt gleichmäßig verteilten Anordnung der Fundamentkörper um die Mittenachse ist eine gleichmäßige Aufnahme der Kräfte aus dem Jacket-Abschnitt, von beispielsweise den statischen Gewichtskräften sowie von dynamisch wirkenden Belastungen, in das Fundament, insbesondere Schwerkraftfundament bewirkt. Darüber hinaus ist eine gleichmäßig verteilte Kraftübertragung beziehungsweise Krafteinleitung von der Auflagerfläche des Fundaments, insbesondere Schwerkraftfundamentes in die Aufstandsfläche des Gewässergrunds erzielt und somit ein sicherer Stand der Gründungsstruktur auf dem Gewässergrund über einen langen Zeitraum gewährleistet. Das von zwei benachbarten Radialachsen eingeschlossene Winkelmaß ist vorzugsweise abhängig von der Anzahl der zur Ausbildung des Fundaments, insbesondere Schwerkraftfundaments eingesetzten Fundamentkörper.

Bevorzugt sind mindestens einander unmittelbar benachbart angeordnete Fundamentkörper über ein oder mehrere Verbindungsstreben miteinander verbunden, wodurch eine bevorzugt starre und verwindungssteife Kopplung der Fundamentkörper untereinander erreicht ist. Bevorzugt werden zur Kopplung der Fundamentkörper rohrförmige Verbindungsstreben verwendet, die große Kräfte im Verhältnis zu ihrem Eigengewicht übertragen können. Vorzugsweise werden mehrere Verbindungsstreben zur Kopplung von zwei miteinander zu verbindenden Fundamentkörpern eingesetzt, die parallel oder unter einem vorbestimmten Winkel zueinander verlaufen. Eine mögliche Ausgestaltung der Erfindung sieht vor, dass die unter einem Winkel zueinander verlaufenden Verbindungsstreben einen Knoten, also einen gemeinsamen Verbindungspunkt, ausbilden.

Bevorzugt weist die Strebenkonstruktion eines Fundamentkörpers mehrere, vorzugsweise vier, fünf, sechs oder mehr sich parallel und/oder im Wesentlichen vertikal erstreckende Außenstreben auf. Bevorzugt sind an den oberen und unteren Enden der Außenstreben sich in einem Winkel zwischen 40° und 70° zur Längsachse der Außenstreben erstreckende Kopf- und Fußstreben angeordnet, welche pyramidenförmig verlaufen und jeweils ein oberes und unteres Ende des Füllraumes des Fundamentkörpers definieren. Die parallel zueinander verlaufenden Außenstreben bilden vorzugsweise ein Prisma mit einer sechseckigen Grundfläche aus. Die Kopf- und Fußstreben weisen in einer bevorzugten Ausführung jeweils einen zentralen Verbindungspunkt auf. Die Kopfstreben des Fundamentkörpers sind mit einem Fuß eines Jacket-Abschnittes gekoppelt und die Fußstreben der Strebenkonstruktion werden bevorzugt mit einer Auflagestruktur des Fundamentkörpers verbunden.

In einer weiteren bevorzugten Ausgestaltung weist der Fundamentkörper eine oder mehrere verschließbare Füllöffnungen zum Befüllen des Füllraumes mit dem Ballastmaterial auf. Über die bevorzugt an der Oberseite des Füllraumes angeordneten Füllöffnungen kann das Ballastmaterial, mit dem die Masse des Fundamentkörpers und damit des gesamten Fundaments, insbesondere Schwerkraftfundamentes erhöht wird, bevorzugt nachträglich in den Füllraum eingeleitet werden, nachdem das Fundament, insbesondere Schwerkraftfundament auf dem Gewässergrund abgesetzt wird. Somit weist das Fundament, insbesondere Schwerkraftfundament während der Installation ein deutlich verringertes Eigengewicht von unter 700 Tonnen auf. Für den Installationsvorgang und den Transport an den Installationsort können damit übliche Kranschiffe oder Transportmittel gängiger Größen verwendet werden.

Bevorzugt weist der mittels des textilen Flächengebildes erzeugte Füllraum einen trichterförmigen und/oder einen verstärkten Bodenbereich auf. Mit Hilfe des trichterförmigen Bodenbereichs ist ein gleichmäßiges Befüllen des gesamten Füllraumes mit Ballastmaterial gewährleistet. Darüber hinaus wird der Bodenbereich gemäß einer bevorzugten Weiterbildung verstärkt ausgebildet, um die Masse bzw. das Eigengewicht des Ballastmaterials aufnehmen und einen sicheren Rückhalt des Ballastmaterials im Inneren des Füllraums gewährleisten zu können. Das Verstärken des Bodenbereichs kann beispielsweise mit Hilfe von in das textile Flächengebilde eingearbeiteten Verstärkungen, wie z.B. von Verstärkungsstreben, erreicht werden.

Eine weitere bevorzugte Ausgestaltung der Gründungsstruktur sieht vor, dass der Fundamentkörper eine Auflagerstruktur zum Einleiten der Gewichtskraft der Gründungsstruktur in den Gewässergrund aufweist. Mit Hilfe der Auflagerstruktur des Fundamentkörpers ist eine Auflagerfläche ausgebildet. Über die Auflagerfläche ist eine sichere Krafteinleitung der am Fundament, insbesondere Schwerkraftfundament wirkenden und sich aus Eigengewicht und dynamischen Belastungen an den Offshore-Anlagen zusammensetzenden Kräfte in den Gewässergrund gewährleistet. Vorzugsweise weist jeder der Fundamentkörper des Fundaments, insbesondere Schwerkraftfundaments eine Auflagerstruktur auf, die eine Auflagerfläche umfasst, die vorzugsweise mindestens der Grundfläche eines jeweiligen Fundamentkörpers entspricht. Die Auflagerstruktur ist bevorzugt mit dem Fußbereich der den Füllraum für das Ballastmaterial aufnehmenden bzw. begrenzenden Strebenkonstruktion verbunden. Vorzugsweise erfolgt die Verbindung über einen zentralen Aufnahmebereich, der mit der Spitze der pyramidenförmig zusammenlaufenden Fußstreben der Strebenkonstruktion verbunden ist. Alternativ kann die Auflagerstruktur auch bevorzugt direkt mit den fünf, sechs oder sieben oder auch mehr Außenstreben des prismaförmigen Abschnitts der Strebenkonstruktion verbunden sein.

Gemäß einer bevorzugten Ausgestaltung der Erfindung ist die Auflagerstruktur aus einem strebenartigen, bevorzugt sechseckigen Auflagerrahmen gebildet, welcher im Auflagerbereich mit einem flexiblen, bevorzugt fluiddurchlässigen textilen Flächengebilde ausgerüstet ist. Als Auflagerfläche der erfindungsgemäßen Auflagerstruktur wird statt einem starren ebenen Flächenkörper das flexible Flächengebilde verwendet, wodurch geringfüge Unebenheiten des Gewässergrunds ausgeglichen werden können. Das Flächengebilde ist bevorzugt an der Unterseite des Auflagerrahmens gespannt. Die erfindungsgemäße Auflagerstruktur weist eine hohe Standfestigkeit auf, da ein ungewolltes bzw. selbsttätiges Absenken des Auflagerrahmens durch das über dem Auflagerrahmen gespannte Flächengebilde mit bevorzugt hoher Reißfestigkeit vermieden wird. Bevorzugt weist der Auflagerrahmen im Wesentlichen radial verlaufende Verstärkungsprofile auf, mit denen das Flächengebilde im Mittenbereich der Auflagerstruktur zusätzlich abgestützt wird. Der zentrale Mittenbereich der Auflagerstruktur kann in einer optionalen bzw. alternativen Ausgestaltung der Auflagerstruktur eine Auflagerplatte aus einem starren, ebenen Plattenkörper aufweisen.

Eine alternative Ausgestaltung der Erfindung sieht vor, dass die Auflagerstruktur zusätzlich zu einem Auflagerrahmen einen auf dem Meeresboden ansetzbaren Saugfuß mit einem nach unten offenen vorzugsweise zylindrischen Wandungsabschnitt und einem geschlossenen Deckenelement aufweist. Ein solcher Saugfuß, auch bezeichnet als Sucking Bucket, besteht aus einem im Wesentlichen becherförmigen Aufsetzelement mit einer in Richtung des Gewässergrundes gerichteten Öffnung. Der Saugfuß weist eine im Wesentlichen zylindrische Wandung mit einem meist scharfkantigen Rand auf, um ein vereinfachtes Eindringen in den Gewässergrund zu ermöglichen. Die Saugfüße bestehen aus am oberen Ende konisch zulaufenden Saugglocken, die unterhalb der Fußkonstruktion montiert werden können. Sie sind so konstruiert, das sie als modulare Einheiten ohne wesentliche Veränderungen der gesamten Struktur integriert werden können.

Bevorzugt weist der Saugfuß, vorzugsweise das Deckenelement, einen Anschluss für eine medienleitende Verbindung mit einer Saugeinrichtung auf, welche eingerichtet ist Flüssigkeiten und Feststoffe zu fördern. Bevorzugt ist jeder Saugfuß mit einer ihm zugeordneten Saugeinrichtung gekoppelt, mittels der nach dem Aufsetzen des Saugfußes auf dem Gewässergrund ein Unterdruck am Saugfuß erzeugt wird. Aufgrund des wirkenden Unterdrucks und der gleichzeitig wirkenden Gewichtskraft der Gründungstruktur ist ein Eindringen des zylindrische Wandungsabschnitts in den Gewässergrund bewirkt. Wasser und Teile des Gewässergrunds werden dabei aus dem Saugfuß herausgesaugt und der Saugfuß saugt sich in den Boden bzw. Gewässergrund. Dadurch kann das Fundament ohne ein aufwendiges Vorbereiten des Gewässergrunds, wie beispielsweise das Einebnen der Aufstandsfläche für das Fundament mit einem Schwimmbagger, abgesenkt werden. Es ist lediglich notwendig, dass im Aufstellbereich keine großen Steine oder Felsformationen vorhanden sind. Ebenso sollte der Boden unterhalb der vorzugsweise sechs Fundamentkörper eine weitgehend vergleichbare Konsistenz aufweisen.

Bevorzugt ist die Saugeinrichtung mit einer Nivelliereinrichtung gekoppelt ist, welche einen oder mehrere Messaufnehmer zum Erfassen der Ausrichtung der Gründungsstruktur in Bezug auf eine horizontale Ebene aufweist. Das Fundament, insbesondere Schwerkraftfundament wird vorzugsweise über die Saugfüße an den Fundamentkörpern zu einer horizontalen Ebene ausgerichtet. Damit wird eine im Wesentlichen dauerhaft senkrechte Ausrichtung der auf der Gründungsstruktur montierbaren Offshore-Anlage gewährleistet. Mittels der Nivelliereinrichtung werden die jeweiligen Saugeinrichtungen an den einzelnen Saugfüßen gezielt angesteuert, wobei nach dem Ausrichten des Fundaments die Saugeinrichtung abgeschaltet wird. Ein Nachregulieren des Niveaus ist auch später durch erneutes Saugen oder gegenteilig durch das Erhöhen des Drucks in den einzelnen Saugglocken möglich.

Bevorzugt weist die Strebenkonstruktion der Fundamentkörper und die Verbindungsstreben des Fundaments, insbesondere Schwerkraftfundaments eine Beschichtung, vorzugsweise eine Zweikomponenten-Kunststoffbeschichtung, auf. Mit Hilfe der zumindest die Oberflächen der Strebenkonstruktion und der Verbindungsstreben abdeckenden Beschichtung ist eine vorteilhafte Korrosionsbeständigkeit der vorzugsweise aus einem metallischen Werkstoff ausgebildeten Profile des Fundaments, insbesondere Schwerkraftfundaments erreicht. Auch der mit dem Fundament, insbesondere Schwerkraftfundament zu verbindende Jacket-Abschnitt, insbesondere die den Jacket-Abschnitt ausbildenden Profile und Streben sind mit der die oberflächenbedeckenden Beschichtung ausgerüstet. Als Beschichtung kommt vorzugsweise eine Zweikomponenten-Kunststoffbeschichtung zum Einsatz, die vorteilhafte Eigenschaften hinsichtlich Ihrer Korrosionsbeständigkeit gegenüber Seewasser aufweist.

Bevorzugt sind die Strebenkonstruktion der Fundamentköroer und/oder die Verbindungsstreben des Fundaments, insbesondere Schwerkraftfundaments und/oder die Streben des Jacket-Abschnitts als Hohlprofile, insbesondere als Rohre ausgebildet. Die Verwendung von Rohren; vorzugsweise von Hohlrohren aus Stahl, hat den Vorteil, dass diese einfach miteinander verschweißt werden können und eine hohe Festigkeit und Biegesteifigkeit bei einem deutlich verringerten Gewicht gegenüber einem Vollmaterial aufweisen.

Eine weitere Ausgestaltung der erfindungsgemäßen Gründungsstruktur sieht vor, dass die Aufstandsfläche für das Fundament, insbesondere Schwerkraftfundament mittels eines textilen Flächengebildes ausgelegt ist, dass sich bevorzugt in einer im Wesentlichen horizontalen Ebene erstreckt. Mit Hilfe des textilen Flächengebildes ist ein Schutz des Bodens unterhalb und zwischen den Fundamentkörpern des Fundaments, insbesondere Schwerkraftfundaments gewährleistet. Darüber ist ein Abtragen des Untergrunds, das sogenannte Auskolken, infolge von Wasserströmungen im Bereich des Fundaments, insbesondere Schwerkraftfundaments vermieden. Vorzugsweise wird ein mehrlagiges wasserdurchlässiges Gewebe am Installationsort im Bereich der Aufstandsfläche für das Fundament, insbesondere Schwerkraftfundament gespannt, das den Abtrag des Bodens bevorzugt unabhängig von seiner Zusammensetzung entgegenwirkt.

Die Erfindung betrifft in einem weiteren Aspekt ein Verfahren zum Errichten einer Gründungsstruktur für Offshore-Anlagen nach einer der vorstehend beschriebenen, bevorzugten Ausführungsformen, insbesondere Windenergieanlagen, auf einem Gewässergrund, umfassend die Schritte: Vorbereiten, insbesondere Ausgleichen, eines die Aufstandsfläche für die Gründungsstruktur bildenden Bereichs auf dem Gewässergrund; Absetzen von zumindest des Fundaments, insbesondere Schwerkraftfundaments auf dem Gewässergrund; Ballastieren der einzelnen Fundamentkörper des Fundaments, insbesondere Schwerkraftfundaments durch das Einfüllen von Ballastmaterial in die Fundamentkörper; optionales Aufsetzen des Jacket-Abschnitts der Gründungsstruktur auf dem Fundament, insbesondere Schwerkraftfundament und Verbinden von Jacket-Abschnitt und Fundament, insbesondere Schwerkraftfundament.

Der Erfindung liegt die Erkenntnis zu Grunde, dass mit Hilfe der erfindungsgemäßen Verfahrensschritte eine vorteilhaft einfache Installation einer Gründungsstruktur gewährleistet ist, die einen Jacket-Abschnitt, auch bezeichnet als Jacket-Konstruktion, zum Tragen einer Offshore-Anlage umfasst. Die Installation des Fundament, insbesondere Schwerkraftfundaments kann bevorzugt ohne das Rammen von Rammpfählen und damit mit einer deutlich reduzierten Geräuschemission vorgenommen werden. Zudem sind der Transport und auch die Installation mit gängigen Transportmitteln und Installationsschiffen möglich, da das Eigengewicht des erfindungsgemäßen Fundament, insbesondere Schwerkraftfundaments im Vergleich zu bekannten Fundament, insbesondere Schwerkraftfundamenten eine leichte Baukonstruktion aufweist. Zum Vorbereiten, insbesondere dem Ausgleichen des Untergrunds wird bevorzugt ein Schwimmbagger oder ein Baggerschiff mit Saugrohr eingesetzt, um eventuelle Vertiefungen bzw. Erhebungen am Gewässergrund ausgleichen oder abtragen zu können. Anschließend wird mit Hilfe eines Hebemittels, wie z.B. einem Schwimmkran oder einem Errichterschiff das Fundament, insbesondere Schwerkraftfundament wahlweise allein oder bereits mit dem damit gekoppelten Jacket-Abschnitt auf dem vorbereiteten Grund des Gewässers abgesetzt. Nach dem Absetzen erfolgt das Ballastieren des sich aus einzelnen Fundamentkörpern zusammensetzenden Fundaments, insbesondere Schwerkraftfundaments durch das Einfüllen von Ballastmaterial in die Füllräume der Fundamentkörper. Bevorzugt wird Sand vorbestimmter Mindestkorngröße oder optional ein aushärtbares Füllmaterial in die Füllräume eingefüllt. Zur Ausbildung des Füllraumes wird ein flexibles, fluiddurchlässiges Flächengebilde eingesetzt. Die Verwendung von Sand im Gegensatz zu einem aushärtbaren Ballastmaterial, wie z.B. Beton hat den Vorteil, dass der Sand wieder aus dem Füllraum entfernt werden kann, um die Gründungsstruktur beispielsweise nachträglich ausrichten zu können. Nach dem Befüllen der einzelnen Fundamentkörper erfolgt dann das optionale Aufsetzen des Jacket-Abschnitts der Gründungsstruktur auf das Fundament, insbesondere Schwerkraftfundament, sofern im ersten Schritt nur das Fundament, insbesondere Schwerkraftfundament auf dem Gewässergrund abgesetzt wurde. Anschließend erfolgt das Verbinden von Jacket-Abschnitt und Fundament, insbesondere Schwerkraftfundament beispielsweise über eine lösbare Verbindung mittels Schrauben oder eine unlösbare Verbindung, wobei Jacket-Abschnitt und Fundament, insbesondere Schwerkraftfundament an den Kopplungsbereich miteinander verschweißt werden.

Das erfindungsgemäße Verfahren wird vorteilhaft weitergebildet durch einen oder mehrere oder sämtlich der nachfolgenden Schritte: Auslegen eines flexiblen, bevorzugt fluiddurchlässigen, textilen Flächengebildes auf den vorbereiteten Untergrund vor dem Absetzen des Fundaments, insbesondere Schwerkraftfundaments; Erzeugen eines Unterdrucks an einem auf dem Gewässergrund aufsitzenden Saugfuß der Fundamentkörper und kontrolliertes Ablassen des Fundaments, insbesondere Schwerkraftfundaments in den Grund des Gewässers; Ballastieren des Fundamentkörpers durch Einspülen von Ballastmaterial in bevorzugt einen fluiddurchlässigen Füllraum des Fundamentkörpers; Bedecken und/oder Versiegeln des mit dem Flächengebilde ausgerüsteten Bereich des Meeresbodens und/oder der Zwischenräume zwischen den Fundamentkörpern nach dem Absetzen des Fundaments, insbesondere Schwerkraftfundaments und dem Ballastieren des selbigen mit einem Abdeckmaterial. Vorzugsweise wird auf dem vorbereiteten Gewässergrund ein flexibles Flächengebilde ausgebracht bzw. ausgelegt, um zu verhindern, dass im Bereich des Fundaments, insbesondere Schwerkraftfundaments wirkende Strömungen ein Abtragen des Bodens bewirken. Damit ist ein Schutz gegen das sogenannte Auskolken im Bereich der Gründungsstruktur erzielt. In Abhängigkeit von der Ausgestaltung der auf dem Grund des Gewässers abzusetzenden Gründungsstruktur wird an optional vorzusehenden Saugfüßen an den Fundamentkörpern ein Unterdruck erzeugt, wodurch das Fundament, insbesondere Schwerkraftfundament zumindest um ein vorbestimmtes Maß in den Gewässergrund eingelassen oder abgesenkt wird. Über die Saugwirkung an den Saugfüßen der Auflagerstrukturen ist eine Art Verankerung des Fundaments, insbesondere Schwerkraftfundaments im Boden erreicht, wobei die Saugwirkung nicht permanent aufrecht erhalten wird.

Bevorzugt erfolgt das Ballastieren des Fundamentkörpers durch Einspülen von Sand, der beispielsweise zuvor während des Vorbereitens des Untergrunds am Installationsort abgebaggert bzw. abgesaugt wurde. Nach dem Absetzen des Fundaments, insbesondere Schwerkraftfundaments und dem Ballastieren des selbigen wird der Bereich um das Fundament, insbesondere Schwerkraftfundament und/oder des zuvor mit dem Flächengebilde ausgerüsteten Bereich des Meeresboden mit einem Abdeckmaterial, wie beispielsweise Kies oder Gesteine bedeckt und/oder versiegelt. Mit dem Abdecken bzw. Versiegeln des Areals um das Fundament wir dem Abtragen des Bodens weiter entgegengewirkt.

Vorteilhafte Weiterbildungen des erfindungsgemäßen Verfahrens zum Errichten einer Gründungsstruktur ergeben sich aus den vorstehenden Erläuterungen zur erfindungsgemäßen Gründungsstruktur und deren bevorzugten Ausführungsformen. Insoweit wird auf die oben stehenden Erläuterungen verwiesen.

Im Folgenden wird die Erfindung anhand bevorzugter Ausführungsbeispiele unter Bezugnahme auf die beigefügten Figuren näher beschrieben. Hierbei zeigen:
- Fig. 1:: eine Vorderansicht der erfindungsgemäßen Gründungsstruktur gemäß einer ersten Ausführungsform;
- Fig. 2:: eine perspektivische Ansicht der Gründungsstruktur nach Figur 1;
- Fig. 3:: eine Detailansicht des erfindungsgemäßen Fundaments, insbesondere Schwerkraftfundaments in einer perspektivischen Darstellung;
- Fig. 4:: eine perspektivische Ansicht eines weiteren erfindungsgemäßen Ausführungsbeispiels einer Gründungsstruktur, und
- Fig. 5:: eine perspektivische Detailansicht des Fundaments, insbesondere Schwerkraftfundaments des zweiten Ausführungsbeispiels der Gründungsstruktur nach Figur 4,
- Fig. 6:: eine perspektivische Darstellung einer erfindungsgemäßen Gründungsstruktur gemäß eines dritten Ausführungsbeispiels.

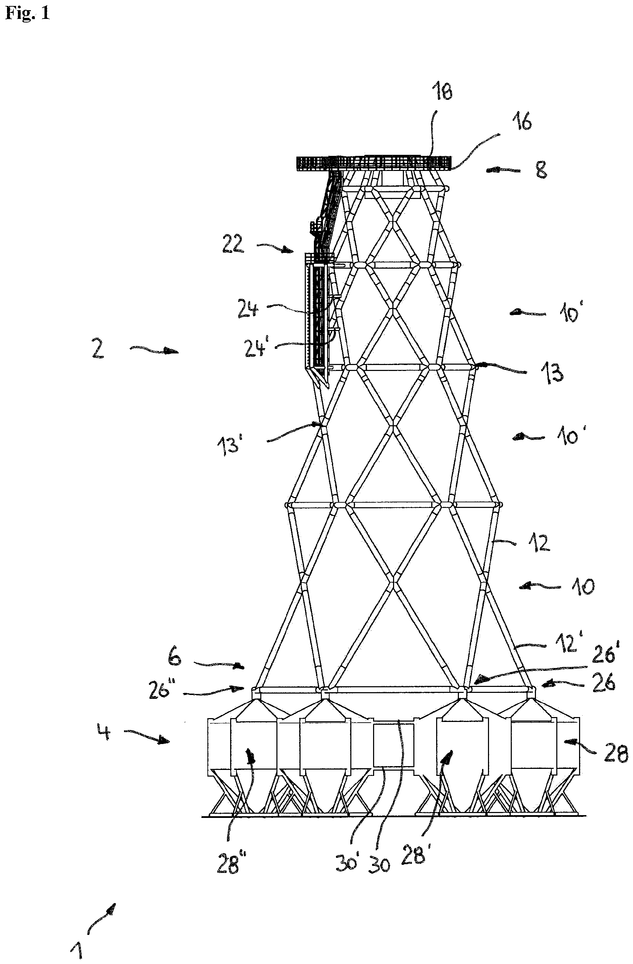

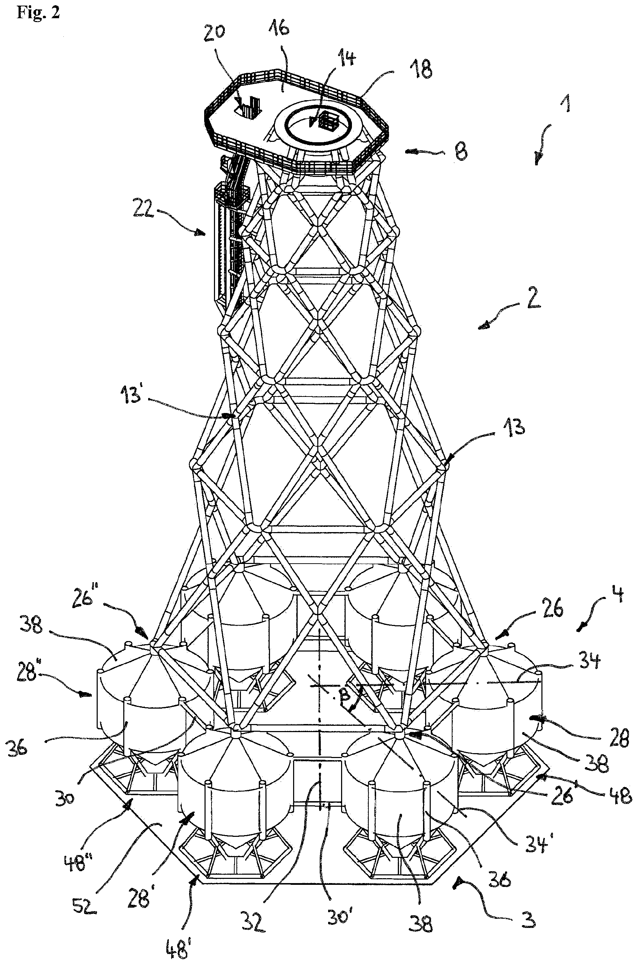

Figur 1 zeigt eine Vorderansicht der erfindungsgemäßen Gründungsstruktur 1. Die Gründungsstruktur 1 weist einen Jacket-Abschnitt 2 und ein Fundament, insbesondere Schwerkraftfundament 4 auf, wobei das Fundament, insbesondere Schwerkraftfundament 4 mit dem Fußbereich 6 des Jacket-Abschnitts 2 fest verbunden ist. Der Jacket-Abschnitt 2 ist eine sogenannte Hexabase mit einer im Wesentlichen sechseckigen Grundform für eine im oberen Bereich 8 des Jacket-Abschnitts 2 zu montierenden Windenergieanlage. Der Jacket-Abschnitt 2 wird aus mehreren übereinander angeordneten Fachwerksegmenten 10, 10', 10" mit einer Vielzahl von Streben 12, 12' aus rohrförmigen Hohlprofilen ausgebildet. Die Streben sind bevorzugt starr miteinander verbunden und bilden in den Verbindungsbereichen Knotenpunkte 13, 13' aus. Am oberen Endabschnitt 8 ist eine Aufnahme 14 (Fig. 2) zum Aufnehmen eines Turmschaftes einer Windenergieanlage vorgesehen. Zudem weist der obere Endabschnitt 8 eine Serviceplattform 16 auf, in der die Aufnahme 14 für den Turmschaft ausgespart ist. Ferner ist an der äußeren Peripherie der Serviceplattform 16 ein Geländer 18 angeordnet, welches vollständig um den äußeren Umfang der Serviceplattform herum verläuft. Des Weiteren weist die Serviceplattform eine Zugangsöffnung 20 auf, der eine Leiter 22 zugeordnet ist, welche sich mindestens entlang eines Drittels der Länge des Jacket-Abschnitts 2 erstreckt. Die Leiter 22 ist über Haltestreben 24, 24' mit dem Fachwerksegment 10" des Jacket-Abschnitts 2 verbunden.

Wie aus Figur 2 ersichtlich weist die Gründungsstruktur 1 eine sich von der Aufstandsfläche 3 des Fundaments, insbesondere Schwerkraftfundaments 4 bis zum oberen Endabschnitt 8 des Jacket-Abschnitts 2 im Wesentlichen gleichmäßig abnehmenden Querschnitt auf. Der Jacket-Abschnitt 2 weist im vorliegenden Ausführungsbeispiel auf Höhe des Fußbereichs 6 eine sechseckige Grundfläche auf. Jeder Eckbereich 26, 26' ist mit einem unterhalb des Jacket-Abschnitts 2 angeordneten Fundamentkörper 28, 28', 28" gekoppelt, welche das Fundament, insbesondere Schwerkraftfundament 4 der Gründungsstruktur 1 ausbilden. In Abhängigkeit welche Grundform der Jacket-Abschnitt aufweist, wie zum Beispiel fünf-, sechs-, sieben- oder achteckig, sind eine entsprechende Anzahl von Fundamentkörpern 28, 28', 28" unter jeweils einem Eckbereich 26, 26' angeordnet. Die Fundamentkörper 28, 28', 28" können modulartig zu einem Fundament, insbesondere Schwerkraftfundament 4 unterschiedlicher Größe zusammengesetzt werden, wobei jeweils unmittelbar zueinander benachbarte Fundamentkörper 28, 28', 28" über parallel zueinander verlaufende Verbindungsstreben 30, 30' miteinander verbunden sind. Das Fundament, insbesondere Schwerkraftfundament 4 weist eine Mittenachse 32 auf, um welche die Fundamentkörper in einem gleichmäßigen Abstand herum angeordnet sind, und wobei durch die Mittenachse und die Fundamentkörpermitte verlaufende Radialachsen 34, 34' die unmittelbar zueinander benachbart sind jeweils einen Winkel β einschließen, der einem ganzen Teil eines Vollkreises entspricht. Der Winkel zwischen zwei zueinander benachbarten Radialachsen 34, 34' des gezeigten Ausführungsbeispiels beträgt entsprechend 1/6 eines Vollkreises.

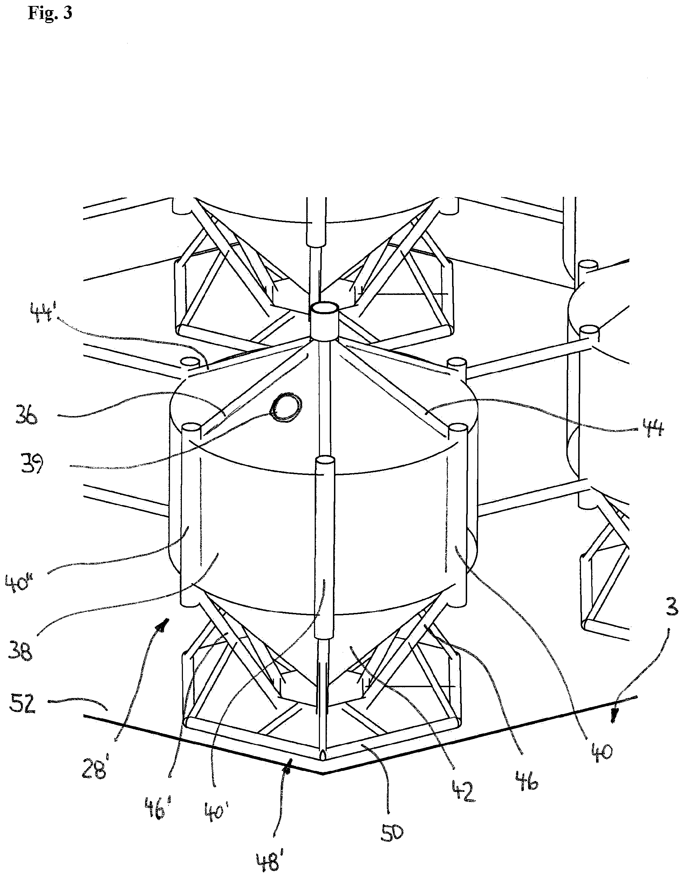

Jeder Fundamentkörper 28, 28', 28" weist eine Strebenkonstruktion 36 und einen von der Strebenkontruktion gehaltenen Füllraum 38 zur Aufnahme von Ballastmaterial auf. Der Füllraum 38 der Fundamentkörper 28, 28', 28" weist eine verschließbare Füllöffnung 39 zum Befüllen des Füllraums mit dem Ballastmaterial auf. Der Füllraum 38 ist in einer Ausführungsform der vorliegenden Erfindung aus einem flexiblen fluiddurchlässigen textilen Flächengebilde, bevorzugt einem seewasserbeständigen Kunstfasertextil ausgebildet. Die Strebenkonstruktion 36 des Fundamentkörper 28, 28', 28" weist im vorliegenden Ausführungsbeispiel sechs sich parallel und im Wesentlichen vertikal erstreckende Außenstreben 40, 40', 40" (Fig. 3) auf. Mit Hilfe des den Füllraum 38 ausbildenden flexiblen Flächengebilde kann jede beliebige Form des Füllraumes erzeugt werden. Vorliegend weist der Füllraum eine im Wesentlichen zylindrische Grundform mit am oberen und unteren Ende auslaufenden Kegel- bzw. Pyramidenabschnitten auf.

Wie in der perspektivischen Detailansicht des Fundaments, insbesondere Schwerkraftfundaments 4 in Fig. 3 verdeutlicht, weist der Füllraum 38 einen trichter- oder. kegelförmigen Bodenbereich 42 auf. Zu den sechs Außenstreben 40, 40', 40" verlaufen unter einem vorbestimmten Winkel zu den Außenstreben eine gleichgroße Anzahl von Kopfstreben 44, 44' und Fußstreben 46, 46', welche von den Außenstreben aufeinander zulaufend angeordnet sind. Die Kopf- und Fußstreben 44, 44', 46, 46' verlaufen zu den Außenstreben 40, 40', 40" in einem Winkelbereich zwischen etwa 40 und 70° zu deren Längsachsen. Darüber hinaus weisen die einzelnen Fundamentkörper 28, 28', 28" Auflagerstrukturen 48, 48', 48" zum Einleiten der Gewichtskraft der Gründungsstruktur 1 in den darunter liegenden Gewässergrund auf. Die Auflagerstruktur umfasst ferner einen sechseckigen Auflagerrahmen 50, der jeweils aus sechs gleichlangen Streben ausgebildet ist. An der Auflagerfläche ist jeder Auflagerrahmen 50, was jedoch nicht näher dargestellt ist, mit einem fluiddurchlässig textilen Flächengebilde ausgerüstet. Das Flächengebilde ist unterseitig über den Auflagerrahmen 50 gespannt und soll ein Einsinken in den Meeresboden verhindern. Wie aus Figur 2 des Weiteren ersichtlich, wird über die gesamte Aufstandsfläche 3 für das Fundament, insbesondere Schwerkraftfundament 4 ein bevorzugt mehrlagiges Gewebe 52 gespannt, welches wasserdurchlässig ist, jedoch das Abtragen des Bodens um den Bereich der Gründungsstruktur 1 verhindern soll.

Nachfolgend ist beispielhaft das Verfahren zum Errichten einer Gründungstruktur gemäß der ersten Ausführungsform beschreiben. Die Installation des Fundaments 4 erfolgt in den folgenden Schritten: 1. Vorbereitung des Bodens durch einen Schwimmbagger oder ein Saugrohr, um Depressionen oder Erhebungen zu nivellieren. 2. Absetzen des Fundaments 4 wahlweise mit oder ohne Jacket-Abschnitt 2 auf dem Gewässergrund. 3. Befüllen des Füllraumes 38 der Fundamentkörper 28, 28', 28" zur Ballastierung. 4. Wartezeit zum Setzen des Sandes innerhalb des Füllraumes, während der das Wasser, mit dem der Sand in Schläuchen gepumpt wurde, über die fluiddurchlässige Wandung des Füllraumes 38 herausgedrängt wird. 5. Befüllen bis zur Füllstandgrenze, anschließend Versiegelung der Einfüllöffnung 39. 6. optionales. Aufsetzen der Jacket-Abschnitts 2 auf die Adapter über den über den Fundamentkörpern 28, 28', 28". 7. Zuschütten der Zwischenräume mit Kies zwischen den Auflagern, um die Kolkschutzbespannung zu versiegeln.

Das Fundament 4 ist nun bereit zur Installation der Windturbinenanlage. Da das Fundament 4 und der Jacket-Abschnitt 2 unbefüllt nur Massen unterhalb von 700 Tonnen aufweisen, ist die Installation bereits mit einem kleineren Kran durchführbar, der nicht zwingend auf einer teuren Jack-Up-Plattform installiert sein muss. Weiterhin wird ein größerer Schwimmbagger des Saugbaggertyps benötigt, um den benötigten Sandballast verfügbar zu machen, und diesen zum Fundament zu pumpen. Der Sand kann in der heute üblichen Weise in einem Sandabbaugebiet in der Nähe des Installationsortes vom Seeboden gefördert werden.

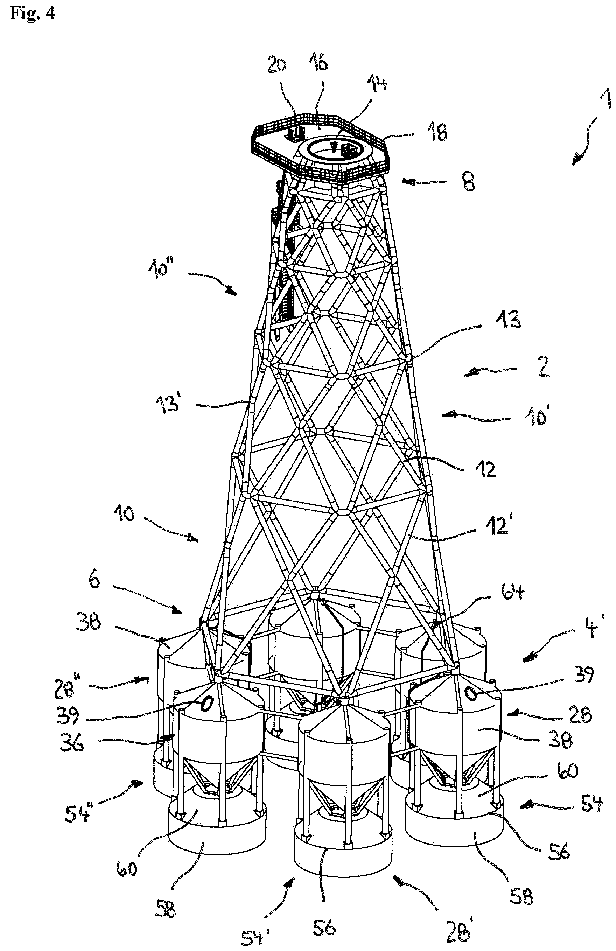

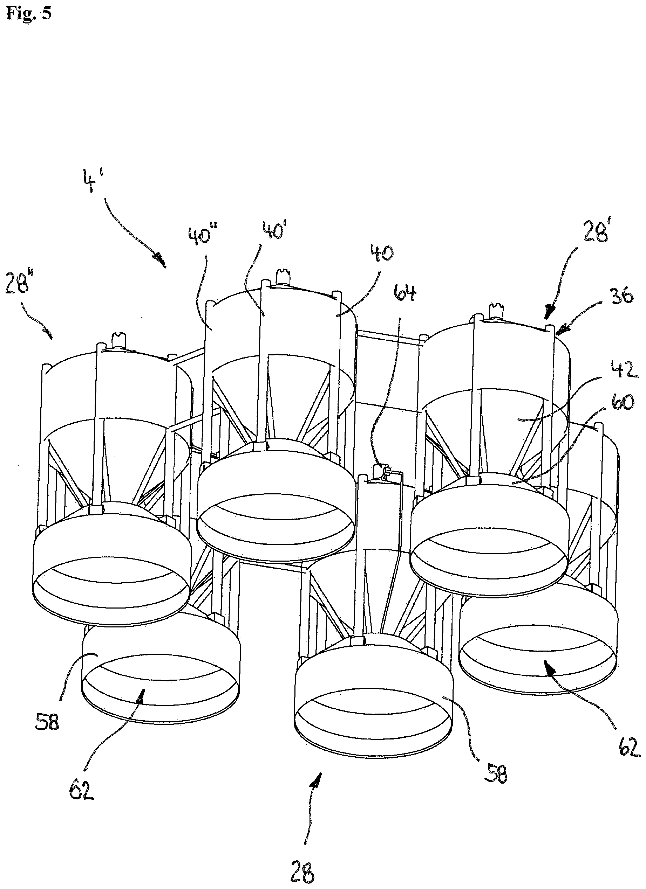

In den Figuren 4 und 5 ist ein zweites Ausführungsbeispiel der Gründungsstruktur 1 gezeigt, welches einen identisch ausgebildeten Jacket-Abschnitt 2 aufweist. Unterschiede bestehen hinsichtlich des Fundaments, insbesondere Schwerkraftfundament 4', dessen Fundamentkörper 28, 28', 28" mit alternativ ausgestalteten Auflagerstrukturen 54, 54', 54" ausgerüstet sind. Die Auflagerstrukturen 54, 54', 54" weisen einen auf dem Meeresboden ansetzbaren Saugfuß 56 auf. Der Saugfuß 56 umfasst einen nach unten offenen vorzugsweise zylindrischen Wandungsabschnitt 58 und ein geschlossenes oberes Deckenelement 60.

Wie durch die die Fundamentkörper 28, 28', 28" von unten perspektivisch darstellende Figur 5 verdeutlicht, ist der Saugfuß 56 mit seinem Wandungsabschnitt 58 und dem Deckenelement 60 saugglockenartig ausgebildet. Nach dem Aufsetzen des Fundament, insbesondere Schwerkraftfundaments 4' mit seinen Fundamentkörper 28, 28', 28" auf dem Gewässergrund entsteht somit ein zur Umgebung abgeschirmter Hohlraum 62. Der Saugfuß 56 der Fundamentkörper 28, 28', 28" ist jeweils mit einer Saugeinrichtung 64 fluidleitend gekoppelt, mittels der ein Unterdruck in dem zur Umgebung abgegrenzten Hohlraum 62 erzeugt werden kann. Über den Unterdruck im Hohlraum 62 wird zu der durch das Fundament, insbesondere Schwerkraftfundament 4' wirkenden Gewichtskraft zusätzlich eine Ansaugkraft in Richtung des Untergrunds bzw. Gewässergrunds erzeugt. Dadurch wird das Fundament, insbesondere Schwerkraftfundament 4' in Richtung des Gewässergrunds angesaugt und entsprechend sinkt ein stückweit in diesen ein. Um eine ausreichende Stabilität der Saugfüße an den Fundamentkörpern sicherzustellen, weisen die Außenstreben 40, 40', 40" der Fundamentkörper 28, 28', 28" in der vorliegenden Ausführung eine verlängerte Ausgestaltung in Richtung der Saugfüße 56 auf. Die Außenstreben 40, 40', 40" sind vorzugsweise mit dem äußeren Umfangsbereich des Saugfußes 56 fest verbunden. Nach dem Absenken des Fundaments 4' im Gewässergrund werden die Fundamentkörper 28, 28', 28", insbesondere deren Füllräume 38, wie zum ersten Ausführungsbeispiel beschrieben, über die Füllöffnung 39 mit einem Ballastmaterial gefüllt.

Nachfolgend ist beispielhaft das Verfahren zum Errichten einer Gründungstruktur gemäß der zweiten Ausführungsform beschreiben. Das Fundament 4' kann ohne Vorbereitung des Seebodens auf diesen abgesenkt werden. Es ist lediglich notwendig, dass die Aufstellbereich keine großen Steine oder Felsformationen aufweist. Ebenso sollte der Boden unterhalb aller der sechs Fundamentkörper eine weitgehend vergleichbare Konsistenz aufweisen. Diese Art von Fundamenten wird vorwiegend in lockeren Böden eingesetzt, da diese als einzige in der Lage sind, in den Hohlraum des Saugfußes 56 einzudringen. Nach dem Aufsetzen des Saugfußes 56 auf dem Seeboden dringen die Schneidkanten der Saugfüße angetrieben durch das Eigengewicht des Fundaments 4' etwas in den Boden ein und stellen so automatisch eine Abdichtung des Innenraums der Saugfüße gegenüber der Umgebung her.

Durch eine Saugeinrichtung 64 wird ein Unterdruck am Saugfuß erzeugt und das innerhalb des vom Saugfuß 56 und dem Seeboden gebildeten nun abgeschlossenen Hohlraums befindliche Wasser entfernt. Der Saugfuß dringt in Folge in den Boden ein, den es zunehmend in seinen Hohlraum 62 einsaugt. Durch den Unterdruck im Inneren wird es ferner von dem äußeren Wasserdruck in den Boden gepresst. Je nach der Einsinkgeschwindigkeit der einzelnen Füße kann die Zeitdauer und Intensität des Absaugens variiert werden, um das gesamte Konstrukt auf ein einheitliches Niveau abzusenken.

Der Ansaugprozess ist abgeschlossen, wenn die Reibung des Bodens an der Wandung des Elements ein weiteres Eindringen nicht mehr zulässt. Die Reibung ist dann groß genug, um den auf das Fundament einwirkenden Kraftmomenten begegnen zu können. In einer Ausführung der Erfindung ist die Saugeinrichtung eingerichtet Flüssigkeiten und Feststoffe zu fördern. Dadurch kann ein Saugfuß 56 zum Ausgleich von Unebenheiten am Gewässergrund tiefer in den Boden eingesaugt werden. Über ein Ventil innerhalb der Saugeinrichtung 64 kann der abgesaugte Boden nach dem Aussaugen der Saugglocken für die Ballastierung der Füllräume der Fundamentkörper verwendet werden. Nach dem Beenden des Saugvorgangs wird das Fundament, wie zum vorigen Ausführungsbeispiel geschildert, mit z.B. Sand als Ballastmaterial beschwert. Ein Nachregulieren des Niveaus ist auch später durch erneutes Saugen oder gegenteilig durch das Erhöhen des Drucks bzw. das Einpumpen von Feststoffen, wie zum Beispiel Sand, in den einzelnen Saugfüßen möglich.

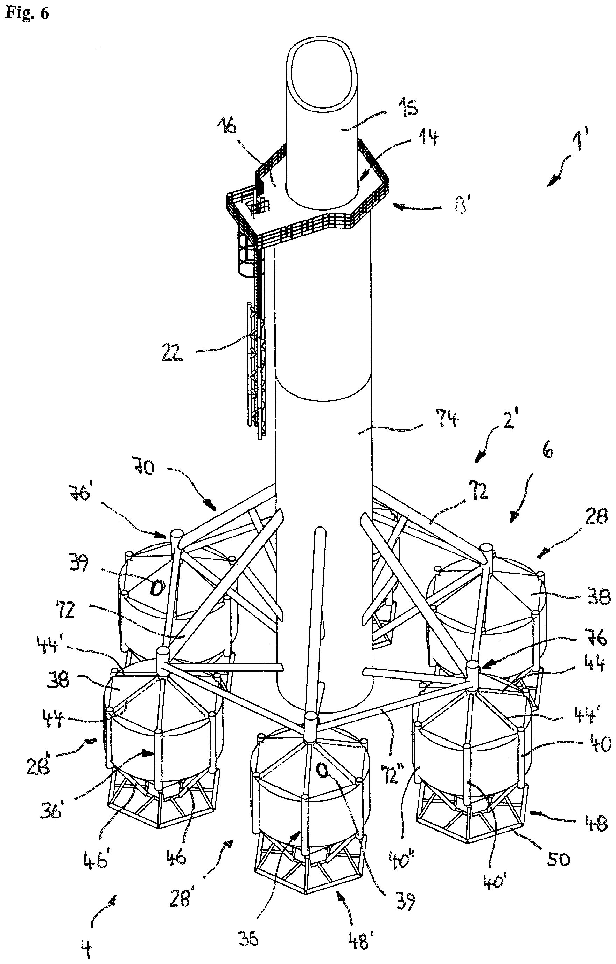

Figur 6 zeigt eine dritte Ausführungsform einer erfindungsgemäßen Gründungsstruktur 1', welche einen Jacket-Abschnitt 2' mit einem Fachwerksegment 70 aufweist. Der Jacket-Abschnitt 2' ist mit einem, ähnlich einem Monopile ausgebildeten Zentralrohr 74 verbunden, das an seinen oberen Endabschnitt 8' eine Aufnahme 14 für einen Turmschaft 15 einer Windenergieanlage aufweist. Am oberen Endabschnitt 8' erstreckt sich um die Aufnahme 14 eine Service-Plattform 16, welche über eine mit der Serviceplattform 16 verbundenen Leiter 22 begehbar ist. Das Fachwerksegment 70 des Jacket-Abschnitts 2' weist in radial zur Längsachse des Zentralrohrs 74 verlaufenden Ebenen mehrere Streben 72, 72' auf, wobei die Streben 72, 72' einer Ebene zu einem Eckbereichen 76, 76' zusammen laufen. Die Eckbereiche 76, 76' sind über im Wesentlichen horizontal verlaufende Streben 72" verbunden, welche den Fußbereich 6' des Jacket-Abschnitts 2' ausbilden. Der Fußbereich 6' des Jacket-Abschnitts 2' ist mit einem Fundament, insbesondere Schwerkraftfundament 4 aus einer Vielzahl von Fundamentkörpern 28, 28', 28" gekoppelt, wobei jeder Fundamentkörper 28, 28', 28" unterhalb eines jeweiligen Eckbereichs 76, 76' des Jacket-Abschnitts 2' angeordnet ist. In der in Figur 6 gezeigten Ausführungsform der Gründungsstruktur 1' ist das Fundament, insbesondere Schwerkraftfundament 4 ohne die einander benachbarte Fundamentkörper 28, 28', 28" verbindende Verbindungsstreben 30, 30' (Figur 2) ausgeführt. Jeder Fundamentkörper 28, 28', 28" weist eine zum ersten Ausführungsbeispiel der Gründungsstruktur 1 identisch ausgebildete Strebenkonstruktion 36, 36'auf. An der Strebenkonstruktion 36, 36' ist ein Füllraum 38 mit einer Füllöffnung 39 für ein in den Füllraum einzufüllendes Ballastmaterial angeordnet. Die Strebenkonstruktion 36, 36' weist sechs sich parallel und im Wesentlichen vertikal erstreckende Außenstreben 40, 40', 40" auf, mit denen jeweils pyramiden- oder kegelförmig zueinander verlaufende Kopfstreben 44, 44' und Fußstreben 46, 46' verbunden sind. Jeder Fundamentkörper 28, 28', 28" weist eine mit seiner Strebenkonstruktion 36, 36' gekoppelte Auflagerstruktur 48, 48', 48" zum Einleiten der Gewichtskraft der Gründungsstruktur 1' in die Aufstandsfläche des Gewässergrundes auf. Die Auflagerstrukturen 48, 48', 48" weisen jeweils einen Auflagerrahmen 50 auf, der an seiner Unterseite mit einem fluiddurchlässigen, bevorzugt textilen Gewebe bespannt ist. Wie auch zu den obigen Ausführungsformen beschrieben, können die Aufstandsfläche für die Gründungsstruktur 1' auf dem Gewässergrund mit einem mehrlagigen Gewebe ausgelegt sein, um das Abtragen des Bodens im Bereich um die Gründungsstruktur 1' zu verhindern. Zusätzlich kann der Bereich um die Gründungsstruktur 1' sowie die Zwischenräume zwischen den Fundamentkörpern 28, 28', 28" durch ein Abdeckmaterial bedeckt und/oder versiegelt werden. Ähnliche oder identische Bauteile bzw. Komponeneten sind mit denselben Bezugszeichen bezeichnet.

### Bezugszeichenliste

- 1, 1': Gründungsstruktur
- 2, 2': Jacket-Abschnitt
- 3: Aufstandsfläche
- 4, 4': Fundament, insbesondere Schwerkraftfundament
- 6, 6': Fußbereich
- 8, 8': Endabschnitt
- 10, 10', 10": Fachwerksegmente
- 12, 12': Streben
- 13, 13': Knotenpunkt
- 14: Aufnahme
- 15: Turmschaft
- 16: Serviceplattform
- 18: Geländer
- 20: Zugangsöffnung
- 22: Leiter
- 24, 24': Haltestreben
- 26, 26': Eckbereich
- 28, 28', 28": Fundamentkörper
- 30, 30': Verbindungsstreben
- 32: Mittenachse
- 34, 34': Radialachsen
- 36, 36': Strebenkonstruktion
- 38: Füllraum
- 39: Füllöffnung
- 40, 40', 40": Außenstreben
- 42: Bodenbereich
- 44, 44': Kopfstreben
- 46, 46': Fußstreben
- 48, 48', 48": Auflagerstruktur
- 50: Auflagerrahmen
- 52: Gewebe
- 54, 54', 54": Auflagerstruktur
- 56: Saugfuß
- 58: Wandungsabschnitt
- 60: Deckenelement
- 62: Hohlraum
- 64: Saugeinrichtung
- 70: Fachwerksegment
- 72, 72': Streben
- 74: Zentralrohr
- 76, 76': Eckbereich

## Patentansprüche

1. Gründungsstruktur (1, 1') für Offshore-Anlagen, insbesondere Windenergieanlagen, mit
einem Jacket-Abschnitt (2, 2') aus mehreren fachwerkartig miteinander verbundenen Streben (12, 12'),
wobei der Jacket-Abschnitt (2, 2') einen Fußbereich (6, 6') aufweist, der mit einem Fundament, insbesondere Schwerkraftfundament (4, 4'), zum Aufstellen auf einem Gewässergrund fest verbunden ist,
wobei das Fundament, insbesondere Schwerkraftfundament (4, 4') aus mehreren Fundamentkörpern (28, 28', 28") gebildet ist, welche jeweils mindestens einen Füllraum (38) zur Aufnahme von Ballastmaterial aufweisen,
**dadurch gekennzeichnet, dass** der Fundamentkörper (28, 28', 28") eine Strebenkonstruktion (36, 36') aufweist, an der der Füllraum (38) zur Aufnahme von Ballastmaterial angeordnet ist,
und dass der Füllraum (38) mindestens teilweise aus einem flexiblen, fluiddurchlässigem textilen Flächengebilde, vorzugsweise einem seewasserbeständigen Kunstfasertextil, gebildet ist.

2. Gründungsstruktur (1, 1') nach Anspruch 1,
**dadurch gekennzeichnet, dass** das Flächengebilde ein seewasserbeständiges Kunstfasertextil ist.

3. Gründungsstruktur (1, 1') nach Anspruch 1 oder 2,
**dadurch gekennzeichnet, dass** das textile Flächengebilde eine vorbestimmte maximale Maschenweite aufweist und eingerichtet ist, ein Ballastmaterial ab einer vorbestimmten Korngröße im Inneren des Füllraumes (38) zurück zu halten.

4. Gründungsstruktur (1, 1') nach mindestens einem der Ansprüche 1 bis 3,
**dadurch gekennzeichnet, dass** das Fundament, insbesondere Schwerkraftfundament (4, 4') eine Mittenachse (32) aufweist, um welche die Fundamentkörper (28, 28', 28") in einem im Wesentlichen gleichmäßigen Abstand herum angeordnet sind, wobei durch die Mittenachse (32) und die Fundamentkörpermitte verlaufende Radialachsen (34, 34'), welche unmittelbar zueinander benachbart sind, jeweils einen Winkel einschließen, der im Wesentlichen einem ganzen Teil eines Vollkreises entspricht.

5. Gründungsstruktur (1, 1') nach mindestens einem der Ansprüche 1 bis 4,
dass mindestens einander benachbart angeordnete Fundamentkörper (28, 28', 28") über ein oder mehrere Verbindungsstreben (30, 30') miteinander verbunden sind.

6. Gründungsstruktur (1, 1') nach mindestens einem der Ansprüche 1 bis 5,
**dadurch gekennzeichnet, dass** die Strebenkonstruktion (36, 36') eines Fundamentkörpers (28, 28', 28") mehrere, vorzugsweise vier, fünf, sechs oder mehr sich parallel und/oder im Wesentlichen vertikal erstreckende Außenstreben (40, 40', 40") aufweist.

7. Gründungsstruktur (1, 1') nach mindestens einem der Ansprüche 1 bis 6,
**dadurch gekennzeichnet, dass** der Fundamentkörper (28, 28', 28") eine oder mehrere verschließbare Füllöffnungen (39) zum Befüllen des Füllraumes (38) mit Ballastmaterial aufweist.

8. Gründungsstruktur (1, 1') nach mindestens einem der Ansprüche 1 bis 7,
**dadurch gekennzeichnet, dass** der Fundamentkörper (28, 28', 28") eine Auflagerstruktur (48, 48', 48", 54, 54', 54") zum Einleiten der Gewichtskraft der Gründungsstruktur (1) in den Gewässergrund aufweist.

9. Gründungsstruktur (1, 1') nach Anspruch 8,
**dadurch gekennzeichnet, dass** die Auflagerstruktur (28, 28', 28") aus einem strebenartigen, bevorzugt sechseckigen Auflagerrahmen (50) gebildet ist, welcher im Auflagerbereich mit dem flexiblen, bevorzugt fluiddurchlässigen textilen Flächengebilde ausgerüstet ist.

10. Gründungsstruktur (1, 1') nach Anspruch 8,
**dadurch gekennzeichnet, dass** die Auflagerstruktur (54, 54', 54") einen auf dem Gewässergrund ansetzbaren Saugfuß (56) mit einem nach unten offenen vorzugsweise zylindrische Wandungsabschnitt (58) und einem geschlossenen Deckenelement (60) aufweist.

11. Gründungsstruktur (1, 1') nach Anspruch 10,
**dadurch gekennzeichnet, dass** mindestens ein Saugfuß mit einer Saugeinrichtung medienleitend gekoppelt, wobei die Saugeinrichtung eingerichtet ist, Flüssigkeiten und/oder Feststoffe zu fördern.

12. Gründungsstruktur (1, 1') nach Anspruch 10 oder 11,
**dadurch gekennzeichnet, dass** die Saugeinrichtung mit einer Nivelliereinrichtung gekoppelt ist, welche einen oder mehrere Messaufnehmer zum Erfassen der Ausrichtung der Gründungsstruktur in Bezug auf eine horizontale Ebene aufweist.

13. Gründungsstruktur (1, 1') nach einem der Ansprüche 1 bis 12,
**dadurch gekennzeichnet, dass** die Strebenkonstruktion (36, 36') der Fundamentkörper (28, 28', 28") und die Verbindungstreben (30, 30') des Fundaments, insbesondere Schwerkraftfundaments (4, 4') und/oder die Streben (12, 12', 72, 72') des Jacket-Abschnitts (2) eine Beschichtung, vorzugsweise eine Zweikomponeneten-Kunststoffbeschichtung, aufweist und/oder als Hohlprofile, insbesondere als Rohre, ausgebildet sind.

14. Gründungsstruktur (1, 1') nach einem der Ansprüche 1 bis 11,
**dadurch gekennzeichnet, dass** die Aufstandsfläche (3) für das Fundament, insbesondere Schwerkraftfundament (4, 4') auf dem Gewässergrund mittels des textilen Flächengebildes ausgelegt ist, das sich bevorzugt in einer im Wesentlichen horizontalen Ebene erstreckt.

15. Verfahren zum Errichten einer Gründungsstruktur für Offshore-Anlagen nach einem der Ansprüche 1 bis 14, insbesondere Windenergieanlagen, auf einem Gewässergrund, umfassend die Schritte:
- optionales Vorbereiten, insbesondere Ausgleichen, eines die Aufstandsfläche (3) für die Gründungsstruktur (1, 1') bildenden Bereiches auf dem Gewässergrund;
- Absetzen von zumindest des Fundaments, insbesondere Schwerkraftfundaments (4, 4') auf dem Gewässergrund;
- Ballastieren der einzelnen Fundamentkörper (28, 28', 28") des Fundaments, insbesondere Schwerkraftfundaments (4, 4') durch das Einfüllen von Ballastmaterial in die Fundamentkörper (28, 28', 28");
- optionales Aufsetzen des Jacket-Abschnittes (2) der Gründungsstruktur (1) auf das Fundament, insbesondere Schwerkraftfundament (4, 4') und Verbinden von Jacket-Abschnitt (2) und Fundament, insbesondere Schwerkraftfundament (4, 4');

16. Verfahren nach Anspruch 15,
umfassend einen, mehrere oder sämtliche der Schritte:
- Auslegen eines flexiblen, bevorzugt fluiddurchlässigen textilen Flächengebildes auf den vorbereiteten Untergrund vor dem Absetzen des Fundaments, insbesondere Schwerkraftfundaments (4, 4');
Absetzen von zumindest des Fundaments, insbesondere Schwerkraftfundaments (4, 4') auf dem Gewässergrund ohne vorheriges Vorbereiten des Gewässergrundes;
- Erzeugen eines Unterdruckes an einem auf dem Gewässergrund aufsitzenden Saugfuß (56) der Fundamentkörper (28, 28', 28") und kontrolliertes Ablassen des Fundaments, insbesondere Schwerkraftfundaments (4') in den Gewässergrund;
- Ballastieren des Fundamentkörpers (28, 28', 28") durch Einspülen von Ballastmaterial in bevorzugt einen fluiddurchlässigen Füllraum (38) des Fundamentkörpers (28, 28', 28");
- Befüllen des Füllraumes (38) des Fundamentkörpers (28, 28', 28") bis zur Füllstandgrenze, anschließend Versiegelung der Einfüllöffnung (39);
- Bedecken und/oder Versiegeln des mit dem Flächengebilde ausgerüsteten Bereichs des Gewässergrunds und/oder der Zwischenräume zwischen den Fundamentkörpern (28, 28', 28") nach dem Absetzen des Fundaments, insbesondere Schwerkraftfundaments (4, 4') und dem Ballastieren des selbigen mit einem Abdeckmaterial;
- Nivellieren bzw. Nachnivellieren des Fundaments (4') in Bezug auf eine horizontale Ebene durch Erzeugen eines Unterdruckes und/oder Überdruckes an einem oder mehreren Saugfüßen (56) eines Fundamentkörpers (28, 28', 28").

## Claims

1. Foundation structure (1, 1') for offshore assemblies, in particular wind turbines, with a jacket section (2, 2') comprising multiple struts (12, 12') connected to one another in a lattice-type structure,
wherein the jacket section (2, 2') has a base region (6, 6'), which is fixedly connected to a foundation, in particular a gravity foundation (4, 4'), for installation on the bed of a watercourse,
wherein the foundation, in particular gravity foundation (4, 4'), is formed from multiple foundation bodies (28, 28', 28"), which respectively have at least one filling space (38) to receive ballast material,
**characterised in that** the foundation body (28, 28', 28") has a strut construction (36, 36'), on which the filling space (38) is arranged to receive ballast material, and that the filling space (38) is formed at least partially from a flexible, fluid-permeable textile fabric, preferably a seawater-resistant synthetic textile.

2. Foundation structure (1, 1') according to claim 1,
**characterised in that** the fabric is a seawater-resistant synthetic textile.

3. Foundation structure (1, 1') according to claim 1 or 2,
**characterised in that** the textile fabric has a predetermined maximum mesh size and is configured to retain a ballast material from a predetermined grain size in the interior of the filling space (38).

4. Foundation structure (1, 1') according to at least one of claims 1 to 3,
**characterised in that** the foundation, in particular gravity foundation (4, 4'), has a centre axis (32), around which the foundation bodies (28, 28', 28") are substantially evenly spaced, wherein radial axes (34, 34') running through the centre axis (32) and the centre of the foundation body and arranged directly adjacent to one another respectively enclose an angle, which substantially corresponds to a whole part of a full circle.

5. Foundation structure (1, 1') according to at least one of claims 1 to 4,
[characterised in] that at least adjacently arranged foundation bodies (28, 28', 28") are connected to one another by means of one or more connection struts (30, 30').

6. Foundation structure (1, 1') according to at least one of claims 1 to 5,
**characterised in that** the strut construction (36, 36') of a foundation body (28, 28', 28") has multiple, preferably four, five, six or more outer struts (40, 40', 40") running parallel and/or substantially vertically.

7. Foundation structure (1, 1') according to at least one of claims 1 to 6,
**characterised in that** the foundation body (28, 28', 28") has one or more closable filling openings (39) for filling the filling space (38) with ballast material.

8. Foundation structure (1, 1') according to at least one of claims 1 to 7,
**characterised in that** the foundation body (28, 28', 28") has a support structure (48, 48', 48", 54, 54', 54") for directing the weight of the foundation structure (1) into the bed of the watercourse.

9. Foundation structure (1, 1') according to claim 8,
**characterised in that** the support structure (28, 28', 28")? is formed from a strut-like, preferably hexagonal support frame (50), which is fitted with a flexible, preferably fluid-permeable, textile fabric in the support region.

10. Foundation structure (1, 1') according to claim 8,
**characterised in that** the support structure (54, 54', 54") has a suction foot (56) placeable on the bed of the watercourse with a downwardly open, preferably cylindrical wall section (58) and a closed cover element (60).

11. Foundation structure (1, 1') according to claim 10,
**characterised in that** at least one suction foot is coupled with a suction device so as to allow media to be conveyed, wherein the suction device is configured to transport liquids and/or solids.

12. Foundation structure (1, 1') according to claim 10 or 11,
**characterised in that** the suction device is coupled with a levelling device, which has one or more measurement pick-ups for detecting the alignment of the foundation structure in relation to a horizontal plane.

13. Foundation structure (1, 1') according to one of claims 1 to 12,
**characterised in that** the strut construction (36, 36') of the foundation bodies (28, 28', 28") and the connection struts (30, 30') of the foundation, in particular gravity foundation (4, 4'), and/or the struts (12, 12', 72, 72') of the jacket section (2) have a coating, preferably a two-component plastic coating, and/or are configured as hollow profiles, in particular as pipes.

14. Foundation structure (1, 1') according to one of claims 1 to 11,
**characterised in that** the support surface (3) for the foundation, in particular gravity foundation (4, 4'), is laid on the bed of the watercourse by means of the textile fabric, which preferably extends in a substantially horizontal plane.

15. Method for erecting a foundation structure for offshore assemblies according to one of claims 1 to 14, in particular wind turbines, on the bed of a watercourse comprising the steps:
• optionally preparing, in particular levelling, a region forming the support surface (3) for the foundation structure (1, 1') on the bed of the watercourse;
• depositing at least the foundation, in particular gravity foundation (4, 4'), on the bed of the watercourse;
• ballasting the individual foundation bodies (28, 28', 28") of the foundation, in particular gravity foundation (4, 4'), by feeding ballast material into the foundation bodies (28, 28', 28");
• optionally attaching the jacket section (2) of the foundation structure (1) onto the foundation, in particular gravity foundation (4, 4'), and connecting the jacket section (2) and foundation, in particular gravity foundation (4, 4').

16. Method according to claim 15,
comprising one, several or all of the steps:
• laying a flexible, preferably fluid-permeable, textile fabric on the prepared support before depositing the foundation, in particular gravity foundation (4, 4');
• depositing at least the foundation, in particular gravity foundation (4, 4'), on the bed of the watercourse without previous preparation of the bed of the watercourse;
• generating a vacuum on a suction foot (56) of the foundation bodies (28, 28', 28") sitting on the bed of the watercourse and controlled lowering of the foundation, in particular gravity foundation (4, 4'), into the bed of the watercourse;
• ballasting the foundation body (28, 28', 28") by pouring ballast material into preferably a fluid-permeable filling space (38) of the foundation body (28, 28', 28");
• filling the filling space (38) of the foundation body (28, 28', 28") to the filling level limit, subsequently sealing the filling opening (39);
• covering and/or sealing the region of the bed of the watercourse fitted with the fabric and/or the interstices between the foundation bodies (28, 28', 28") after depositing the foundation, in particular gravity foundation (4, 4'), and ballasting the same with a covering material;
• levelling or re-levelling the foundation (4') in relation to a horizontal plane by generating a vacuum and/or excess pressure on one or more suction feet (56) of a foundation body (28, 28', 28").

## Revendications

1. Structure de fondation (1, 1') pour des installations offshore, en particulier des éoliennes avec
une section de jaquette (2, 2') composée de plusieurs entretoises (12, 12') reliées l'une à l'autre comme un treillis,
dans laquelle la section de jaquette (2, 2') présente une zone de pied (6, 6') qui est reliée fixement à une fondation, en particulier une fondation de gravité (4, 4') pour le placement sur un fond de l'eau,
dans laquelle la fondation, en particulier la fondation de gravité (4, 4') est formée de plusieurs corps de fondation (28, 28', 28") qui présentent respectivement au moins un espace de remplissage (38) pour la réception de matériau de ballast,
**caractérisée en ce que** le corps de fondation (28, 28', 28") présente une construction d'entretoises (36, 36'), sur laquelle l'espace de remplissage (38) est disposé pour la réception de matériau de ballast,
et **en ce que** l'espace de remplissage (38) est formé au moins partiellement d'une structure plate textile perméable au fluide, flexible, de préférence un textile de fibres artificielles résistant à l'eau de mer.

2. Structure de fondation (1, 1') selon la revendication 1,
**caractérisée en ce que** la structure plate est un textile de fibres artificielles résistant à l'eau de mer.

3. Structure de fondation (1, 1') selon la revendication 1 ou 2,
**caractérisée en ce que** la structure plate textile présente une dimension de mailles maximale prédéterminée et est aménagée afin de retenir un matériau de ballast à partir d'une grosseur de grain prédéterminée à l'intérieur de l'espace de remplissage (38).

4. Structure de fondation (1, 1') selon au moins l'une des revendications 1 à 3,
**caractérisée en ce que** la fondation, en particulier la fondation de gravité (4, 4') présente un axe médian (32), autour duquel les corps de fondation (28, 28', 28") sont disposés à une distance sensiblement uniforme, dans laquelle des axes radiaux (34, 34') s'étendant par l'axe médian (32) et le milieu de corps de fondation qui sont directement contigus l'un à l'autre, forment respectivement un angle qui correspond sensiblement à une partie entière d'un cercle complet.

5. Structure de fondation (1, 1') selon au moins l'une des revendications 1 à 4,
**caractérisée en ce que** des corps de fondation (28, 28', 28") disposés au moins de manière contiguë les uns aux autres sont reliés entre eux par une ou plusieurs entretoises de liaison (30, 30').

6. Structure de fondation (1, 1') selon au moins l'une des revendications 1 à 5,
**caractérisée en ce que** la construction d'entretoises (36, 36') d'un corps de fondation (28, 28', 28") présente plusieurs, de préférence quatre, cinq, six ou plus entretoises extérieures (40, 40', 40") s'étendant parallèlement et/ou sensiblement verticalement.

7. Structure de fondation (1, 1') selon au moins l'une des revendications 1 à 6,
**caractérisée en ce que** le corps de fondation (28, 28', 28") présente une ou plusieurs ouvertures de remplissage (39) refermables pour le remplissage de l'espace de remplissage (38) avec du matériau de ballast.

8. Structure de fondation (1, 1') selon au moins l'une des revendications 1 à 7,
**caractérisée en ce que** le corps de fondation (28, 28', 28") présente une structure d'appui (48, 48', 48", 54, 54', 54") pour l'introduction du poids de la structure de fondation (1) dans le fond de l'eau.

9. Structure de fondation (1, 1') selon la revendication 8,
**caractérisée en ce que** la structure d'appui (28, 28', 28") est formée d'un cadre d'appui (50) de type entretoise, de préférence hexagonal, qui est équipé, dans la zone d'appui, de la structure plate flexible, textile, de préférence perméable au fluide.

10. Structure de fondation (1, 1') selon la revendication 8,
**caractérisée en ce que** la structure d'appui (54, 54', 54") présente un pied d'aspiration (56) pouvant être placé sur le fond de l'eau avec une section de paroi (58), de préférence cylindrique, ouverte vers le bas et un élément supérieur fermé (60).

11. Structure de fondation (1, 1') selon la revendication 10,
**caractérisée en ce qu'**au moins un pied d'aspiration est couplé à un dispositif d'aspiration par conduite de fluide, dans laquelle le dispositif d'aspiration est aménagé afin de refouler des liquides et/ou des solides.

12. Structure de fondation (1, 1') selon la revendication 10 ou 11,
**caractérisée en ce que** le dispositif d'aspiration est couplé à un dispositif de nivellement qui présente un ou plusieurs capteurs de mesure pour la détection de l'orientation de la structure de fondation par rapport à un plan horizontal.

13. Structure de fondation (1, 1') selon l'une des revendications 1 à 12,
**caractérisée en ce que** la construction d'entretoises (36, 36') des corps de fondation (28, 28', 28") et les entretoises de liaison (30, 30') de la fondation, en particulier de la fondation de gravité (4, 4') et/ou les entretoises (12, 12', 72, 72') de la section de jaquette (2) présentent un revêtement, de préférence un revêtement plastique à deux composants et/ou sont réalisées comme des profilés creux, en particulier comme des tubes.

14. Structure de fondation (1, 1') selon l'une des revendications 1 à 11,
**caractérisée en ce que** la surface de contact (3) pour la fondation, en particulier la fondation de gravité (4, 4') est conçue sur le fond de l'eau à l'aide de la structure plate textile qui s'étend de préférence dans un plan sensiblement horizontal.

15. Procédé d'installation d'une structure de fondation pour des installations offshore selon l'une des revendications 1 à 14, en particulier des éoliennes, sur un fond de l'eau, comprenant les étapes :
- la préparation optionnelle, en particulier la compensation d'une zone formant la surface de contact (3) pour la structure de fondation (1, 1') sur le fond de l'eau ;
- le dépôt d'au moins la fondation, en particulier la fondation de gravité (4, 4') sur le fond de l'eau ;
- le ballastage des corps de fondation individuels (28, 28', 28") de la fondation, en particulier la fondation de gravité (4, 4') pour le versement de matériau de ballast dans les corps de fondation (28, 28', 28") ;
- le placement optionnel de la section de jaquette (2) de la structure de fondation (1) sur la fondation, en particulier la fondation de gravité (4, 4'), et la liaison de section de jaquette
(2) et la fondation, en particulier la fondation de gravité (4, 4').

16. Procédé selon la revendication 15,
comprenant une, plusieurs ou toutes les étapes :
- la conception d'une structure plate textile flexible, de préférence perméable au fluide, sur le sol préparé avant le dépôt de la fondation, en particulier la fondation de gravité (4 ; 4') ;
- le dépôt d'au moins la fondation, en particulier la fondation de gravité (4, 4') sur le fond de l'eau sans préparation précédente du fond de l'eau ;
- la génération d'une dépression sur un pied d'aspiration (56) logeant sur le fond de l'eau des corps de fondation (28, 28', 28") et l'évacuation commandée de la fondation, en particulier la fondation de gravité (4') dans le fond de l'eau ;
- le ballastage du corps de fondation (28, 28', 28") par versement de matériau de ballast dans de préférence un espace de remplissage (38) perméable au fluide du corps de fondation (28, 28', 28") ;
- le remplissage de l'espace de remplissage (38) du corps de fondation (28, 28', 28") jusqu'à la limite de niveau puis le scellage de l'ouverture de remplissage (39) ;
- le recouvrement et/ou le scellage de la zone équipée de la structure plate du fond de l'eau et/ou des espaces intermédiaires entre les corps de fondation (28, 28', 28") après le dépôt de la fondation, en particulier la fondation de gravité (4, 4') et le ballastage de celle-ci avec un matériau de recouvrement ;
- le nivellement ou le nivellement ultérieur de la fondation (4') par rapport à un plan horizontal par génération d'une dépression et/ou surpression sur un ou plusieurs pieds d'aspiration (56) d'un corps de fondation (28, 28', 28").
